# EUROPÄISCHE PATENTSCHRIFT

(11) **EP 4 300 443 B1**
(45) Veröffentlichungstag und Bekanntmachung des Hinweises auf die Patenterteilung: **08.10.2025**
(21) Anmeldenummer: 22181975.8
(22) Anmeldetag: 29.06.2022
(51) Int. Cl.: G06V 20/59, G06V 20/56

(54) **VERFAHREN ZUR VORHERSAGE EINES FAHRZEUGSPEZIFISCHEN PARAMETERS, VERFAHREN ZUM ERSTELLEN EINES MODELLS, COMPUTERPROGRAMMPRODUKT UND SYSTEM**
METHOD FOR PREDICTING A VEHICLE-SPECIFIC PARAMETER, METHOD FOR CREATING A MODEL, COMPUTER PROGRAM PRODUCT AND SYSTEM
PROCÉDÉ DE PRÉVISION D'UN PARAMÈTRE SPÉCIFIQUE À UN VÉHICULE, PROCÉDÉ DE CRÉATION D'UN MODÈLE, PRODUIT PROGRAMME INFORMATIQUE ET SYSTÈME

(43) Veröffentlichungstag der Anmeldung: 03.01.2024
(73) Patentinhaber: VOLKSWAGEN AG, 38440 Wolfsburg (DE)
(72) Erfinder: Tao, Narisu, 81245 München (DE)

(56) Entgegenhaltungen:
- EP-B1- 3 666 596

## Beschreibung

Die Erfindung betrifft ein Verfahren zur Vorhersage eines fahrzeugspezifischen Parameters, ein Verfahren zum Erstellen eines Modells, ein Computerprogrammprodukt, sowie ein System. Fahrzeuge weisen oft eine ganze Reihe von Sensoren auf und/oder stehen mit Sensoren, die in der Umgebung der Fahrzeuge vorhanden sind und für das Fahrzeug spezifische Parameter umfassen, im Austausch.

Dabei sind in der Regel nicht nur die unmittelbar erfassten Sensordaten für die fahrenden Personen, sonstige Insassen oder den Hersteller des Fahrzeuges interessant. Auch durch die Erfassung der Daten im Zusammenhang, also einer Verknüpfung der Daten, ergeben sich Möglichkeiten, auf ansonsten nicht unmittelbar erfassbare Parameter zu schließen.

Solange ein kausaler Zusammenhang zwischen der von den Sensoren erfassbaren Größe und der zu berechnenden fahrzeugspezifischen Größe, welche nicht unmittelbar erfasst wird, besteht, lässt sich letztere in der Regel durch einen mathematischen Zusammenhang direkt aus der erfassten Größe bestimmen. Beispielsweise könnte aus der Änderung von GPS-Koordinaten die Geschwindigkeit des Fahrzeugs errechnet werden.

Schwieriger ist es, wenn der Zusammenhang nicht unmittelbar kausal erscheint und die durch Sensoren erfassbare Größe nur mittelbaren Einfluss auf den zu bestimmenden fahrzeugspezifischen Parameter hat. So wird beispielsweise die Bewegung von Raddämpfern zwar von der Beladung und Besetzung des Fahrzeuges und dem Fahrzeuguntergrund abhängig sein. Allerdings lässt sich dieser Zusammenhang nicht in knapper Form darstellen.

Es gibt im Stand der Technik jedoch bereits Ansätze, solche nur mittelbar bestimmbaren Größen mit Hilfe von speziell an die zu bestimmende Größe angepassten Maschinen gelernten Modellen zu berechnen. Allerdings hat sich hierbei herausgestellt, dass der Aufwand beim Trainieren bei jeder neuen zu bestimmenden Größe relativ hoch ist und die Genauigkeit der Vorhersage noch weiter verbessert werden könnte. Ein relevantes Dokument aus dem Stand der Technik ist EP 3 666 596 B1, welches ein Verfahren zur Identifizierung insassenspezifischer Einstellungen mittels unüberwachtem Clustering von Sensordaten offenbart.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, ein Verfahren zur Vorhersage eines fahrzeugspezifischen Parameters, Verfahren zum Erstellen eines Modells zur Vorhersage eines fahrzeugspezifischen Parameters ein Computerprogrammprodukt sowie ein System bereitzustellen, durch welche die Vorhersage auch mehrerer unterschiedlicher fahrzeugspezifischer Parameter schnell, kostengünstig und präzise ermöglicht wird.

Die voranstehende Aufgabe wird gelöst durch ein Verfahren mit den Merkmalen des Anspruchs 1, ein Verfahren mit den Merkmalen des Anspruchs 10, ein Computerprogrammprodukt mit den Merkmalen des Anspruchs 13, sowie ein System mit den Merkmalen des Anspruchs 14. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren zur Vorhersage eines fahrzeugspezifischen Parameters beschrieben sind, selbstverständlich auch im Zusammenhang mit dem erfindungsgemäßen Verfahren zum Erstellen eines Modells, dem erfindungsgemäßen Computerprogrammprodukt und/oder dem erfindungsgemäßen System und jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung ist ein Verfahren zur Vorhersage eines fahrzeugspezifischen Parameters, insbesondere einer Identität einer fahrenden Person, vorgesehen, umfassend:
- Erfassen von Sensordaten durch Sensoren, welche dazu ausgeführt sind, fahrzeugspezifische Messwerte aufzunehmen,
- Umsetzen von Sensordaten in eine numerische Darstellung, wobei die fahrzeugspezifischen Messwerte mit einer unüberwachten Clustering-Methode mehreren Clustern zugeordnet, und die Cluster in eine Folge von Cluster-IDs umgewandelt werden, die Cluster-IDs codiert und durch einen Tokenisierungsalgorithmus ein Vokabular erstellt wird, wobei jede Vokabel einer codierten Sequenz entspricht,
- Zuführen der numerischen Darstellung an zumindest ein trainiertes vorhersagespezifisches Modell, welches dazu ausgeführt ist, eine Vorhersage des fahrzeugspezifischen Parameters auszugeben,
wobei das trainierte vorhersagespezifische Modell auf ein Merkmalsextraktionsnetzwerk zurückgreift, welches mit gespeicherten Sensordaten in der numerische Darstellung trainiert wurde.

Im Zusammenhang mit der Erfindung soll unter einem fahrzeugspezifischen Parameter jede Größe verstanden werden, welche mit dem Fahrzeug zusammenhängt. Dabei muss nicht zwangsläufig ein unmittelbarer kausaler Zusammenhang bestehen. Die Identität einer fahrenden Person hängt nur insofern vom Fahrzeug an sich ab, als dass diese das Fahrzeug in individueller Art und Weise nutzt, sodass durch diese Nutzung auf die Identität geschlossen werden kann. Unter einem Fahrzeug kann prinzipiell jedes Land-, Wasser- oder Luftfahrzeug verstanden werden. Das Fahrzeug kann als Kraftfahrzeug, insbesondere als Personenkraftfahrzeug ausgeführt sein.

Es kann insbesondere vorgesehen sein, dass der fahrzeugspezifische Parameter eine Größe ist, welche nicht durch einen Sensor direkt erfassbar ist, beispielsweise die Art einer Fahrbahn. Dann bietet das erfindungsgemäße Verfahren den Vorteil, dass ein solcher Parameter dennoch vorhergesagt werden kann.

Es kann ebenfalls vorgesehen sein, dass der fahrzeugspezifische Parameter zwar messtechnisch direkt erfassbar ist, die Messung über einen entsprechenden Sensor jedoch aus anderen Gründen nicht gewünscht ist, beispielsweise weil der Sensor zu teuer in Anschaffung oder Betrieb ist, oder die Messung als unkomfortabel wahrgenommen wird (beispielsweise die Feststellung der Identität über einen Fingerabdrucksensor). Auch in diesem Fall wird durch das erfindungsgemäße Verfahren der Vorteil erreicht, dass die Messgröße auch ohne den entsprechenden Sensor erfasst werden kann.

Unter Sensordaten können die von einem Sensor erfassten Daten aufgefasst werden, welche dem Messzweck des Sensors entsprechen. Beispielsweise eine Spannung, die von einem Spannungssensor oder eine Beschleunigung, die von einem Beschleunigungssensor erfasst wird. Ähnlich wie der fahrzeugspezifische Parameter müssen die fahrzeugspezifischen Messwerte nur mittelbar mit dem Fahrzeug zusammenhängen. Beispielsweise kann ein Sensor in einer Fahrbahn eine Erschütterung in Form einer Beschleunigung messen, die von einem Fahrzeug verursacht wurde. Es kann sich jedoch auch um Messwerte handeln, die direkt mit dem Fahrzeug zusammen hängen, beispielsweise die Geschwindigkeit des Fahrzeuges oder dessen Position.

Es kann vorgesehen sein, dass keiner der Sensoren dazu ausgeführt ist, den fahrzeugspezifischen Parameter, welcher durch das Verfahren vorhergesagt werden soll, direkt erfasst. Zwar ist es prinzipiell auch möglich, z .B. direkt erfasste fahrzeugspezifische Parameter durch das Verfahren zu bestätigen, jedoch wird ein besonderer Vorteil erreicht, wenn es sich beim fahrzeugspezifische Parameter um eine Größe handelt, welche nicht direkt durch einen Sensor gemessen werden kann oder soll.

Bei den Sensoren im Sinne der Erfindung kann es sich prinzipiell um jede Vorrichtung handeln, welche zum Erfassen von fahrzeugspezifischen Messwerten geeignet sind. Besonders vorteilhaft einsetzbare Sensoren werden im Folgenden noch beschrieben.

Im Sinne der Erfindung soll unter dem Umsetzen von Sensordaten in eine numerische Darstellung die nachfolgend beschriebene Clusterung und Tokenisierung verstanden werden. Mit anderen Worten entspricht die numerische Darstellung der Sensordaten einer Art Sprache aus Worten und Sätzen, welche den erfassten Sensordaten entsprechen. Allerdings ist diese numerische Darstellung in der Regel für einen menschlichen Leser vollkommen unverständlich. Allenfalls eine Struktur aus Worten und Sätzen bleibt je nach verwendetem Zeichensatz erkennbar.

Bei der Umwandlung in die numerische Darstellung sieht die Erfindung das Zuordnen von Clustern vor. Mit anderen Worten werden die Sensordaten einer Clusteranalyse unterzogen. Bei einer Clusteranalyse wird eine Gruppe von Objekten (hier die Sensordaten) so gruppiert, dass die Objekte in derselben Gruppe (genannt Cluster) einander (in gewissem Sinne) ähnlicher sind als die Objekte in anderen Gruppen (Clustern). Die so bestimmten Cluster werden in eine Folge von Cluster-IDs umgewandelt.

Ferner ist es erfindungsgemäß vorgesehen, die Cluster-IDs zu codieren. Damit ist die Umsetzung der Daten in eine Repräsentation entsprechend einer festgelegten Encodierung gemeint. Unter Encodierung soll die Zuordnung von Cluster-IDs zu grafischen Zeichen, insbesondere zu den Schriftzeichen verstanden werden, damit diese mit Hilfe digitaler Computer gespeichert, übertragen und umgewandelt werden können. Es handelt sich jedoch nicht notwendigerweise ausschließlich um Schriftzeichen. Insbesondere kann jedwede Encodierung verwendet werden, solange diese von einem Computer weiterverarbeitbar ist. Insbesondere Encodierungen mit einer großen Anzahl möglicher Zeichen bieten den Vorteil, dass eine kompakte Darstellung ermöglicht wird, sodass mehr Sensordaten verarbeitet werden können, was wiederum eine genauere Vorhersage des fahrzeugspezifischen Parameters zur Folge hat. Es kann vorgesehen sein, dass die Cluster-IDs mit Hilfe von Unicode encodiert werden, welcher 144.697 Zeichen umfasst. Hierdurch wird eine besonders kompakte Darstellung ermöglicht, welche zudem in den meisten Computersystemen leicht weiterverarbeitbar ist. Vereinfacht gesagt bilden die Zeichen der Encodierung das Alphabet einer Art "Sensordatensprache".

Unter einer Tokenisierung, wie sie im Erfindungsgemäßen Verfahren verwendet wird, soll ein Prozess der Abgrenzung, insbesondere Klassifizierung, von Abschnitten einer Eingabezeichenfolge verstanden werden. Die resultierenden Token können dann zur weiteren Verarbeitung weitergegeben werden. Wenn wie vorangegangen beschrieben bei der Encodierung eine Art Alphabet der Sensordatensprache gebildet wurde, so werden im selben vereinfachten Bild durch die Tokenisierung aus den einzelnen Zeichen des Alphabets nunmehr einzelne Worte oder auch Vokabeln gebildet. So wie das Alphabet derart aufgebaut ist, dass ein einzelnes Zeichen für einen Menschen in der Regen keinen erfassbaren Zusammenhang mit Sensordaten hat, gilt dies auch für die entsprechenden Token bzw. Vokabeln. Allenfalls lässt sich erkennen, dass eine Abfolge von Worten in Sätzen bildbar sind, wobei die Worte im Vergleich zu einer menschlichen Sprache keine gewöhnliche Länge haben müssen. Das gleiche gilt für die Länge und Struktur der Sätze.

Unter einem trainierten vorhersagespezifischen Modell soll ein Algorithmus verstanden werden, welcher dazu ausgeführt ist, eine Vorhersage für einen oder mehrere fahrzeugspezifische Parameter auf Basis der eingegebenen numerischen Darstellung zu erstellen. Wenn beispielsweise dem trainierten vorhersagespezifischen Modell die Sensordaten entsprechend einer vierminütigen Fahrt in der numerischen Darstellung als Eingabe vorgegeben werden, kann das Modell basierend darauf eine Wahrscheinlichkeit ausgeben, dass es sich bei der fahrende Person um den Fahrzeughalter, einen registrierten Benutzer oder um eine unbekannte Person handelt.

Zur Erstellung der Vorhersage des fahrzeugspezifischen Parameters greift das vorhersagespezifische Modell auf ein Merkmalsextraktionsnetzwerk zurück. Das Merkmalsextraktionsnetzwerk, auch Backbone genannt, ist zum einen in der Lage, die Sensordaten durch Clustering und Tokenisierung, wie eben beschrieben, in die numerische Darstellung zu überführen. Zum anderen hat das Merkmalsextraktionsnetzwerk die mit einem vorgegebenen Datensatz die Sensordatensprache trainiert, wie nachfolgend im Zusammenhang mit dem weiteren Aspekt der Erfindung näher beschrieben wird.

Insgesamt bietet die beschriebene Methode zur Vorhersage eines fahrzeugspezifischen Parameters den Vorteil, dass durch die kompakte Form der numerischen Darstellung ein Sprachenmodell in Form des Merkmalsextraktionsnetzwerkes verwendet werden kann, welches durch vorheriges Training eine genaue Vorhersage unterschiedlichster fahrzeugspezifischer Parameter erlaubt. Das liegt auch daran, dass das Merkmalsextraktionsnetzwerk nicht für einen bestimmten Parameter trainiert wird, sondern die "Sprache" der Sensordaten an sich lernt. Für die Vorhersage eines speziellen fahrzeugspezifischen Parameters muss dann nur noch ein auf das Merkmalsextraktionsnetzwerk aufgesetztes, vorhersagespezifisches Modell verwendet werden. Hierdurch wird eine besonders hohe Flexibilität des Verfahrens erreicht.

Weiterhin kann vorteilhafterweise vorgesehen sein, dass ferner das Auslösen zumindest einer Fahrzeugfunktion oder einer Kommunikation vorgesehen ist, wobei das Auslösen auf Basis des vorhergesagten fahrzeugspezifischen Parameters erfolgt. Mit anderen Worten kann vorgesehen sein, dass das Fahrzeug auf eine Vorhersage des fahrzeugspezifischen Parameters entsprechend handelt. Die Fahrzeugfunktion kann beispielsweise als eine Deaktivierung des Fahrzeuges, einem Aufrufen von Fahrzeugeinstellungen (z. B. Sportmodus, Eco-Modus, Autopilot) ausgeführt sein. Wenn beispielsweise festgestellt wird, dass es sich bei der fahrenden Person weder um den Fahrzeughalter noch einer anderen zum Fahren des Fahrzeugs berechtigten Person handelt, kann das Fahrzeug Eingaben der fahrenden Person sperren und das Fahrzeug in einen sicheren Fahrzeugzustand überführen (bei einem Kraftfahrzeug z. B. das Fahrzeug parken oder bei einem Flugzeug das Flugzeug landen). Ferner kann vorgesehen sein, dass eine Kommunikation mit einem Hersteller des Fahrzeugs oder einer Sicherheitsbehörde (z. B. der Polizei) hergestellt wird. Hierdurch kann beispielsweise bei einem vorhergesagten baldigen Ausfall eines Systems ein Inspektionstermin vereinbart werden oder bei einem unbefugten Gebrauch das Fahrzeug durch die Polizei sichergestellt werden. Insgesamt können durch die Aktivierung der Fahrzeugfunktion bzw. der Kommunikation die Sicherheit und der Komfort der Fahrzeugnutzer erhöht werden.

Vorzugsweise kann vorgesehen sein, dass zumindest einer der Sensoren dazu ausgeführt ist, zumindest für eine Fahrdynamik des Fahrzeuges spezifische Messgrößen, insbesondere zumindest das anliegende Drehmoment, Umdrehungen des Motors und/oder der Räder, oder den Batteriestatus, oder für eine Fahrdynamik des Fahrzeuges unspezifische Messgrößen, insbesondere zumindest eine Einstellung eines Temperaturregelungssystems, eine Temperatur im Innenraum oder in Fahrzeugumgebung, eine Sitzposition, oder den Zustand eines Entertainmentsystems, zu erfassen. Mit anderen Worten können für die Fahrdynamik des Fahrzeuges spezifische Messgrößen und/oder für eine Fahrdynamik des Fahrzeuges unspezifische Messgrößen durch die Sensoren erfasst werden. Durch die Erfassung von für Fahrdynamik unspezifische und/oder spezifische Größen wird der Vorteil erreicht, dass die Genauigkeit der Vorhersagen verbessert werden kann. Insbesondere die Kombination sowohl von für die Fahrdynamik unspezifischen als auch spezifischen Messgrößen wirkt sich Vorteilhaft auf die Genauigkeit der Vorhersagen, insbesondere bei einer Identifikation einer Fahrenden Person, aus.

Vorzugsweise kann vorgesehen sein, dass zumindest fünf Sensoren zur Erfassung der Sensordaten vorgesehen sind. Mit anderen Worten kann eine Vielzahl von Sensoren, insbesondere zumindest fünf Sensoren, die Sensordaten erfassen. Grundsätzlich wird durch mehr Sensoren auch eine größere Genauigkeit der Vorhersage erreichbar. Allerdings steigt mit einer größeren Datenmenge auch der Aufwand der Verarbeitung. Die erfindungsgemäße Lehre bietet gerade den Vorteil, dass selbst große Datenmengen durch die numerische Darstellung gut verarbeitet werden und präzise Vorhersagen gemacht werden können.

Es ist ferner denkbar, dass die Sensordaten zumindest für eine Dauer von 4 Minuten, insbesondere 8 Minuten, spezifisch sind. Mit anderen Worten können die Sensordaten für einen verhältnismäßig langen Zeitraum, insbesondere 4 Minuten oder bevorzugt sogar 8 Minuten oder mehr, spezifisch sein. Grundsätzlich bietet eine größere Datenmenge zwar den Vorteil, dass sich generell daraus genauere Vorhersagen ableiten lassen, allerdings geht normalweise mit einer größeren Datenmenge ein unverhältnismäßig großer Aufwand bei der Analyse einher. Beim erfindungsgemäßen Verfahren sind jedoch durch die numerische Darstellung bis dato nicht sinnvoll beherrschbare Datenmengen möglich.

Es ist ferner denkbar, dass die unüberwachte Clustering-Methode als k-nearest neighbors-Algorithmus ausgeführt ist. Der k-nearest neighbors-Algorithmus (KNN) hat als Eingabe die knächstgelegenen Trainingsbeispielen in einem Datensatz. Basierend darauf erfolgt als Ausgabe eine Clusterzugehörigkeit (auch Klassenzugehörigkeit genannt). Ein Objekt wird durch ein Pluralitätsvotum seiner Nachbarn klassifiziert, wobei das Objekt der Klasse zugeordnet wird, die unter seinen k nächsten Nachbarn am häufigsten vorkommt (k ist eine positive ganze Zahl, normalerweise klein). Ist k = 1, so wird das Objekt einfach der Klasse dieses einen nächsten Nachbarn zugeordnet. Da sich dieser Algorithmus bei der Klassifizierung auf den Abstand stützt, kann eine Normalisierung der Trainingsdaten die Genauigkeit erheblich verbessern, wenn die Merkmale unterschiedliche physikalische Einheiten darstellen oder in sehr unterschiedlichen Maßstäben vorliegen. Genau das wird im Verfahren ausgenutzt, da die Sensordaten unterschiedliche physikalische Einheiten darstellen (z. B. Geschwindigkeit und Innenraumtemperatur) und zum anderen auch auf sehr unterschiedlichen Maßstäben vorliegen können (Umdrehungen des Motors ändern sich ggf. schnell, eine Einstellung der Sitzheizung über Minuten ggf. überhaupt nicht). Insgesamt wird durch den k-nearest neighbors-Algorithmus die Genauigkeit der Vorhersagen verbessert, wobei die Effizienz des Verfahrens gesteigert wird.

Weiterhin ist es denkbar, dass der Tokenisierungsalgorithmus als Byte-Pair Encoding-Algorithmus ausgeführt ist. Mit anderen Worten kann als Tokenisierung ein Algorithmus verwendet werden, bei dem das häufigste Paar aufeinanderfolgender Datenbytes durch ein Byte ersetzt wird, das in diesen Daten nicht vorkommt. Hierdurch wird eine effiziente Komprimierung der Darstellung erreicht.

Vorzugsweise kann vorgesehen sein, dass das vorhersagespezifische Modell dazu ausgeführt ist, zumindest die Identität einer fahrenden Person oder einen vom Fahrzeug befahrenen Straßentyp festzustellen. Ferner können noch weitere, insbesondere völlig voneinander unabhängige vorhersagespezifische Modelle verwendet werden. Beispielsweise kann die Wahrscheinlichkeit für dein Ausfall einer Komponente, ein Verbrauch von elektrischer Leistung oder Treibstoff, eine Fahrtdauer auf einem Streckenabschnitt als fahrzeugspezifischer Parameter durch das Verfahren vorhergesagt werden.

Weiterhin ist es denkbar, dass zumindest die numerische Darstellung der Sensordaten keine physikalische Bedeutung hat, oder dass die Anzahl der Zeichen, mit denen die Cluster-IDs bezeichnet werden, wenigstens 1000, insbesondere wenigstens 10.000 Zeichen beträgt. Es kann ebenfalls vorgesehen sein, dass die Anzahl der Zeichen über 100.000 Zeichen beträgt. Je mehr Zeichen in einer Encodierung vorhanden sind, umso kompakter lassen sich die Sensordaten darstellen.

Weiterhin ist es denkbar, Verfahren zum Erstellen eines Modells zur Vorhersage eines fahrzeugspezifischen Parameters, insbesondere einer Identität einer fahrenden Person, bereitzustellen, umfassend:
- Zuordnen von gespeicherten Sensordaten, welche für zumindest ein Fahrzeug spezifisch sind, mit einer unüberwachten Clustering-Methode in mehrere Cluster, wobei die Cluster in eine Folge von Cluster-IDs umgewandelt werden, insbesondere durch eine Recheneinheit,
- Codieren der Cluster-IDs durch einen Tokenisierungsalgorithmus und Erstellen eines Vokabulars, wobei jede Vokabel einer codierten Sequenz entspricht, insbesondere durch eine Recheneinheit, und
- selbstüberwachtes Lernen der codierten Sequenzen, um ein trainiertes Merkmalsextraktionsnetzwerk zu erhalten, insbesondere durch eine Recheneinheit,
- Trainieren eines vorhersagespezifisches Modells mit den gespeicherten Sensordaten, welches dazu ausgeführt ist, eine Vorhersage eines fahrzeugspezifischen Parameters auszugeben,
wobei das vorhersagespezifische Modell auf ein Merkmalsextraktionsnetzwerk zurückgreift, welches mit gespeicherten Sensordaten in der numerischen Darstellung trainiert wurde, insbesondere durch eine Recheneinheit.

Das Verfahren zum Erstellen des Modells erfolgt demnach ähnlich wie das Verfahren zur Vorhersage von fahrzeugspezifischen Parametern, wobei für die Erstellung gespeicherte Sensordaten zum Einsatz kommen, um das Merkmalsextraktionsnetzwerk, auch Backbone genannt, zu erstellen und zu trainieren. Das vorhersagespezifisches Modell wird ebenfalls mit diesen gespeicherten Sensordaten trainiert. Bei den gespeicherten Sensordaten handelt es sich um zuvor erfasste Sensordaten, welche insbesondere auch den vom vorhersagespezifischen Modell vorherzusagenden fahrzeugspezifischen Parameter, beispielsweise die Identität einer fahrenden Person, umfassen können. Beispielsweise kann es sich bei den gespeicherten Sensordaten um Sensordaten handeln, welche für eine Fahrt mit dem Fahrzeug von einer Dauer von 4 Minuten, insbesondere 8 Minuten spezifisch sind. Darüber hinaus können die Sensordaten Daten zur Identität einer fahrenden Person oder der Art der befahrenen Strecke (Autobahn, Stadt, Landstraße,...) aufweisen.

Durch das beschriebene Verfahren lassen sich Modelle zur Vorhersage von fahrzeugspezifischen Parametern erzeugen, welche eine besonders genaue Vorhersage erlauben und zudem flexibel an die jeweilige Vorhersageaufgabe anpassbar sind, ohne dass das Grundmodell (hier das Merkmalsextraktionsnetzwerk) jedes Mal neu erstellt werden muss.

Vorzugsweise kann vorgesehen sein, dass zumindest das selbstüberwachte Lernen ein Sprachrepräsentationsmodell umfasst, oder das vorhersagespezifische Modell dem Merkmalsextraktionsnetzwerk mit einem weiteren Ausgabelayer entspricht. Mit anderen Worten kann das selbstüberwachte Lernen auf Basis einer Methode ausgeführt werden, welche bei Algorithmen für (menschliche) Sprachen angewendet werden und/oder das Merkmalsextraktionsnetzwerk um eine weitere Ausgabeschicht ergänzt, um das vorhersagespezifische Modell zu erzeugen.

Weiterhin ist es denkbar, dass das selbstüberwachte Lernen zumindest ein BERT-Modell, ROBERT-Modell oder Distil-BERT-Modell umfasst. Ein BERT (Bidirectional Encoder Representations from Transformers) ist ein von Google entwickeltes transformatorbasiertes maschinelles Lernverfahren für das Pre-Training der natürlichen Sprachverarbeitung. Ein BERT-Modell bietet den Vorteil, dass die Daten (bzw. die Sprache) in zwei Richtungen gelernt werden kann, und zudem ein einziger großer Textkorpus für das Lernen genügt, welcher durch den numerisch dargestellten gespeicherten Sensordatensatz gebildet wird. ROBERT und Distil-BERT Modelle stellen Weiterentwicklungen des BERT-Modells dar, welche den Vorteil haben, dass diese eine noch genauere Vorhersage ermöglichen und/oder weniger Ressourcen verbrauchen.

Gemäß einem weiteren Aspekt der Erfindung ist ein Computerprogrammprodukt vorgesehen, umfassend Befehle, die bei der Ausführung des Programms durch eine Recheneinheit diese veranlassen, dass zumindest das erfindungsgemäße Verfahren zur Vorhersage eines fahrzeugspezifischen Parameters oder das erfindungsgemäße Verfahren zum Erstellen eines Modells auszuführen.

Somit bringt ein erfindungsgemäßes Computerprogrammprodukt die gleichen Vorteile mit sich, wie sie bereits ausführlich mit Bezug auf ein erfindungsgemäßen beschrieben worden sind. Bei dem Verfahren kann es sich insbesondere um ein computerimplementiertes Verfahren handeln.

Gemäß einem weiteren Aspekt der Erfindung ist ein System vorgesehen, umfassend eine Recheneinheit, welche dazu ausgeführt ist, zumindest das erfindungsgemäße Verfahren zur Vorhersage eines fahrzeugspezifischen Parameters oder das erfindungsgemäße Verfahren zum Erstellen eines Modells, wobei die Recheneinheit zumindest in einem Fahrzeug, in einem Cloudrechner, welcher mit dem Fahrzeug in Datenkommunikation steht, oder in einer Verkehrsinfrastruktur, welche mit dem Fahrzeug in Datenkommunikation steht, angeordnet ist.

Somit bringt ein erfindungsgemäßes System die gleichen Vorteile mit sich, wie sie bereits ausführlich mit Bezug auf ein erfindungsgemäßen Verfahren zur Vorhersage eines fahrzeugspezifischen Parameters, auf ein erfindungsgemäßes Verfahren zum Erstellen eines Modells, und/oder einem erfindungsgemäßen Computerprogrammprodukt beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1:: Eine vereinfachte Darstellung des Ablaufes des erfindungsgemäßen Verfahrens zur Vorhersage eines fahrzeugspezifischen Parameters,
- Fig. 2:: eine vereinfachte Darstellung des Ablaufs des erfindungsgemäßen Verfahren zum Erstellen eines Modells zur Vorhersage eines fahrzeugspezifischen Parameters, und
- Fig. 3:: eine Seitenansicht eines Fahrzeuges, eines Cloudrechners und einer Verkehrsinfrastruktur, auf denen ein Computerprogrammprodukt auf einer Recheneinheit zur Ausführung des erfindungsgemäßen Verfahrens zur Vorhersage eines fahrzeugspezifischen Parameters und/oder des Verfahrens zum Erstellen eines Modells zur Vorhersage eines fahrzeugspezifischen Parameters laufen kann.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

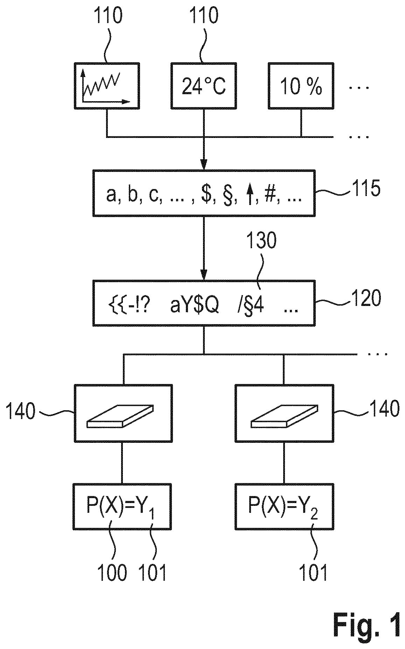

Figur 1 zeigt eine vereinfachte Darstellung des Ablaufes des erfindungsgemäßen Verfahrens zur Vorhersage eines fahrzeugspezifischen Parameters 100. Das Verfahren kann insbesondere zur Vorhersage einer Identität einer fahrenden Person 11 dienen. Erfindungsgemäß ist vorgesehen, dass das Verfahren das Erfassen von Sensordaten 110 durch Sensoren 20, welche dazu ausgeführt sind, fahrzeugspezifische Messwerte aufzunehmen, umfasst.

Bei den Sensoren 20 kann es sich prinzipiell um jedwede Art von Sensoren 20 handeln, solange diese Messwerte erfassen, die für das Fahrzeug 10 spezifisch sind. Damit müssen diese nicht einmal zwangsläufig an dem Fahrzeug 10 selbst angeordnet sein. Beispielsweise kann eine Position oder Geschwindigkeit des Fahrzeuges 10 von einer Verkehrsinfrastruktur 50 erfasst werden.

Es kann vorgesehen sein, dass zumindest einer der Sensoren 20 dazu ausgeführt ist, zumindest für eine Fahrdynamik des Fahrzeuges 10 spezifische Messgrößen, insbesondere zumindest das anliegende Drehmoment, Umdrehungen des Motors und/oder der Räder, oder den Batteriestatus, oder für eine Fahrdynamik des Fahrzeuges 10 unspezifische Messgrößen, insbesondere zumindest eine Einstellung eines Temperaturregelungssystems, eine Temperatur im Innenraum oder in Fahrzeugumgebung, eine Sitzposition, oder den Zustand eines Entertainmentsystems, zu erfassen.

Es kann vorgesehen sein, dass zumindest fünf Sensoren 20 zur Erfassung der Sensordaten 110 vorgesehen sind. Das erfindungsgemäße Verfahren ist besonders vorteilhaft, wenn eine Vielzahl von Sensoren 20 verwendet wird, und kann auch dann eine sichere Vorhersage treffen, wenn die von den Sensoren 20 erfassten Sensordaten 110 in keinem direkt kausalen Zusammenhang mit dem zu vorhersagenden Parameter 100 stehen.

Ferner kann vorgesehen sein, dass die Sensordaten 110 zumindest für eine Dauer von 4 Minuten, insbesondere 8 Minuten, spezifisch sind. Mit anderen Worten kann eine verhältnismäßig große Datenmenge für das Verfahren eingesetzt werden. Hierdurch wird die Vorhersagequalität weiter verbessert. Besonders herauszustellen ist es, dass durch die im Folgende beschriebene Umwandlung der Sensordaten 110 in die nummerische Darstellung 120 diese in dem großen Umfang von mehreren Sensoren 20 über mehrere Minuten von dem Algorithmus vorteilhaft verarbeitbar wird.

Ferner ist beim erfindungsgemäßen Verfahren zur Vorhersage eines fahrzeugspezifischen Parameters 100 vorgesehen, dass die Sensordaten 110 in eine numerische Darstellung 120 umgesetzt werden, wobei die fahrzeugspezifischen Messwerte mit einer unüberwachten Clustering-Methode mehreren Clustern 115 zugeordnet, und die Cluster 115 in eine Folge von Cluster-IDs umgewandelt werden. Mit anderen Worten entsteht durch die Umwandlung in eine Folge von Cluster-IDs Strang von Werten. Dabei kann es sich um eine Zahlenfolge, Buchstaben, etc. handeln. Vereinfacht gesagt entspricht die Folge der Cluster-IDs einem "Alphabet" einer "Sprache" der Sensordaten 110.

Es kann vorgesehen sein, dass zumindest die numerische Darstellung 120 der Sensordaten 110 keine physikalische Bedeutung hat, oder dass die Anzahl der Zeichen, mit denen die Cluster-IDs bezeichnet werden, wenigstens 1000, insbesondere wenigstens 10.000 Zeichen beträgt. Dies kann beispielsweise durch eine Codierung in Unicode erreicht werden, wo neben Zahlen und Buchstaben auch eine Vielzahl anderer Zeichen zur Verfügung stehen. Selbstverständlich ist auch die Verwendung anderer Codierungen, insbesondere mit einer großen Auswahl an Zeichen, denkbar. Hierdurch lässt sich eine besonders kompakte Darstellung erzeugen.

Es kann vorgesehen sein, dass die unüberwachte Clustering-Methode als k-nearest neighbors-Algorithmus (auch als KKN abgekürzt) ausgeführt ist. KNN ist eine Art der Klassifizierung, bei der die Funktion lokal angenähert wird und Berechnungen bis zur Auswertung der Funktion aufgeschoben werden. Da sich dieser Algorithmus bei der Klassifizierung auf den Abstand der Nachbarn stützt, kann die Normalisierung der Trainingsdaten die Genauigkeit drastisch verbessern, wenn die Merkmale unterschiedliche physikalische Einheiten darstellen oder in sehr unterschiedlichen Maßstäben vorliegen. Genau dies kann bei dem beschriebenen Verfahren vorteilhaft ausgenutzt werden, wenn beispielsweise der Messwert für die Innenraumtemperatur des Fahrzeuges 10 (welche sich z. B. innerhalb von einigen Minuten nicht oder kaum ändert) und die Motordrehzahl (welche sich ständig ändert und in keinem physikalischen Zusammenhang mit der Innenraumtemperatur des Fahrzeuges 10 steht) verknüpft wird.

Ferner ist es erfindungsgemäß vorgesehen, dass die Cluster-IDs codiert und durch einen Tokenisierungsalgorithmus ein Vokabular erstellt wird, wobei jede Vokabel einer codierten Sequenz 130 entspricht. Vereinfacht gesagt wird aus dem durch die Folge von Cluster-IDs gewonnenen "Alphabet" der "Sprache" der Sensordaten 110 nunmehr ein "Wörterbuch" mit "Vokabeln" geschaffen, in denen die Sensordaten 120 darstellbar sind.

Es kann vorgesehen sein, dass der Tokenisierungsalgorithmus als Byte-Pair Encoding-Algorithmus ausgeführt ist. Dieser Byte-Pair Encoding-Algorithmus ist eine Form der Datenkompression, bei der das häufigste Paar aufeinander folgender Datenbytes durch ein Byte ersetzt wird, das in diesen Daten nicht vorkommt. Eine Tabelle der Ersetzungen ist erforderlich, um die ursprünglichen Daten wiederherzustellen. Hierdurch kann einerseits eine besonders effiziente Komprimierung erreicht werden, und andererseits wird eine Darstellung der Sensordaten 110 ermöglicht, welche durch ein vorhersagespezifisches Modell 140, das nachfolgend beschrieben wird, gut verarbeitet werden kann.

Erfindungsgemäß ist es ferner vorgesehen, die numerische Darstellung 120 zumindest einem trainierten vorhersagespezifischen Modell 140 zuzuführen, welches dazu ausgeführt ist, eine Vorhersage eines fahrzeugspezifischen Parameters 100 auszugeben, wobei das trainierte vorhersagespezifische Modell 140 auf ein Merkmalsextraktionsnetzwerk 150 zurückgreift, welches mit gespeicherten Sensordaten 160 in der numerischen Darstellung 120 trainiert wurde. Mit anderen Worten wird ein auf eine spezielle Vorhersageaufgabe angepasstes Vorhersagemodell-Modell 140 verwendet, welches sich auf ein Merkmalsextraktionsnetzwerk 150 stützt, welches wiederum die "Sprache" der Sensordaten 110 beherrscht.

Es kann beispielsweise vorgesehen sein, dass das vorhersagespezifische Modell 140 dazu ausgeführt ist, zumindest die Identität einer fahrenden Person 11 oder einen vom Fahrzeug 10 befahrenen Straßentyp 40 festzustellen. Hierzu kann das vorhersagespezifische Modell 140 entsprechend trainiert sein, aus in Sensordaten 110 einer Reihe tokenisierter Cluster-IDs die Identität einer fahrenden Person 11 in Form einer Wahrscheinlichkeit anzugeben.

Der besondere Vorteil des erfindungsgemäßen Verfahrens liegt auch darin begründet, dass das jeweils unterschiedliche vorhersagespezifische Modelle 140 an eine ganze Reihe denkbarer Vorhersageaufgaben angepasst werden kann. Neben der Identifikation einer fahrenden Person 11 könnte beispielsweise der vom Fahrzeug 10 befahrenen Straßentyp 40 vorhergesagt werden. Es kann aber letztlich nahezu jeder fahrzeugspezifische Parameter 100 durch ein entsprechendes vorhersagespezifisches Modell 140 vorhergesagt werden.

Ferner kann das Auslösen zumindest einer Fahrzeugfunktion oder einer Kommunikation vorgesehen sein, wobei das Auslösen auf Basis des vorhergesagten fahrzeugspezifischen Parameters 100 erfolgt. Beispielsweise kann ein Abschalten oder eine Deaktivierung des Fahrzeuges vorgesehen sein, wenn die identifizierte fahrende Person 11 keiner der Personen 11 entspricht, welche als solche für das Fahrzeug 10 in einer Datenbank eingetragen sind. Es kann ebenfalls vorgesehen sein, dass das Fahrzeug 10 in dieser Situation als gestohlen gemeldet wird. Ferner kann z. B. an eine Versicherung oder an einen Hersteller von Kartenmaterial kommuniziert werden, auf welchem Straßentyp 40 das Fahrzeug 10 unterwegs ist.

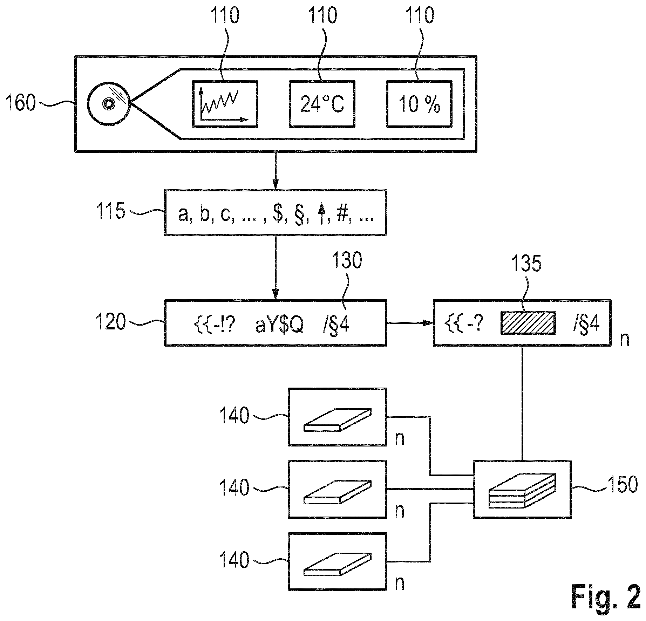

Gemäß einem zweiten Aspekt der Erfindung, welcher vornehmlich in Figur 2 dargestellt ist, ist ein Verfahren zum Erstellen eines Modells 140 zur Vorhersage eines fahrzeugspezifischen Parameters 100, insbesondere einer Identität einer fahrenden Person 11, vorgesehen.

Das Verfahren zum Erstellen eines Modells 140 umfasst das Zuordnen von gespeicherten Sensordaten 160, welche für zumindest ein Fahrzeug 10 spezifisch sind, mit einer unüberwachten Clustering-Methode in mehrere Cluster 115, wobei die Cluster 115 in eine Folge von Cluster-IDs umgewandelt werden, das Codieren der Cluster-IDs durch einen Tokenisierungsalgorithmus und das Erstellen eines Vokabulars, wobei jede Vokabel einer codierten Sequenz 130 entspricht, und selbstüberwachtes Lernen der codierten Sequenzen 130, um ein trainiertes Merkmalsextraktionsnetzwerk 150 zu erhalten.

Ferner ist das Trainieren eines vorhersagespezifisches Modells 140 mit den gespeicherten Sensordaten 160 vorgesehen, welches dazu ausgeführt ist, eine Vorhersage eines fahrzeugspezifischen Parameters 100 auszugeben, wobei das vorhersagespezifische Modell 140 auf ein Merkmalsextraktionsnetzwerk 150 zurückgreift, welches mit gespeicherten Sensordaten 160 in der numerischen Darstellung 120 trainiert wurde.

Ferner kann vorgesehen sein, dass zumindest das selbstüberwachte Lernen ein Sprachrepräsentationsmodell umfasst, oder das vorhersagespezifische Modell 140 dem Merkmalsextraktionsnetzwerk 150 mit einem weiteren Ausgabelayer entspricht.

Das selbstüberwachte Lernen kann zumindest ein BERT-Modell (Bidirectional Encoder Representations from Transformers), ein ROBERT-Modell oder Distil-BERT-Modell umfassen.

Es kann vorgesehen sein, dass beim selbstüberwachten Lernen ein Teil 135 der Sequenz ausgeblendet wird. Das Modell lernt dann, den richtigen Wert für die ausgeblendete Sequenz 135 vorherzusagen. Der Selbstlernprozess kann solange durchgeführt werden, bis eine vorgegebener Wert für die Zuverlässigkeit der Vorhersage des richtigen Werts für die ausgeblendete Sequenz 135 erreicht ist.

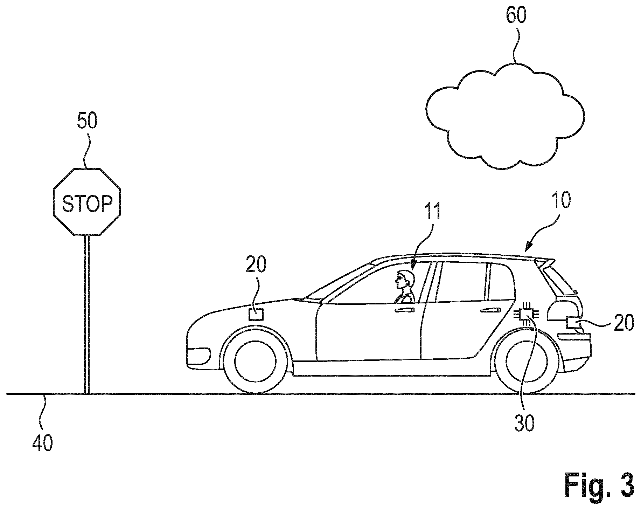

Figur 3 zeigt schließlich beispielhaft eine Umgebung, in der die erfindungsgemäßen Verfahren, das Computerprogrammprodukt und/oder das System zum Einsatz kommen können. In einem Fahrzeug 10 ist hier eine Recheneinheit 30 gezeigt, auf der das Verfahren zur Vorhersage eines fahrzeugspezifischen Parameters 100 und/oder das Verfahren zum Erstellen eines Modells ablaufen kann. Ebenso könnten die genannten Verfahren auf der Verkehrsinfrastruktur 50 oder einem Cloudrechner 60 ablaufen. Die Sensoren 20 können sowohl, wie gezeigt, am Fahrzeug 10, oder beispielsweise an der Verkehrsinfrastruktur 50 angebracht sein. Durch den Einsatz des Verfahrens zur Vorhersage eines fahrzeugspezifischen Parameters 100 kann beispielsweise die Identität einer fahrenden Person 11 oder der befahrene Straßentyp 40 vorhergesagt werden. Durch die Flexibilität des Merkmalsextraktionsnetzwerkes 150 können jedoch noch zahlreiche weitere fahrzeugspezifische Parameter 100 durch das Verfahren bestimmt werden, wenn die vorhersagespezifischen Modelle 140 entsprechend trainiert wurden.

### Bezugszeichenliste

- 10: Fahrzeug
- 11: Person
- 20: Sensoren
- 30: Recheneinheit
- 40: Straßentyp
- 50: Verkehrsinfrastruktur
- 60: Cloudrechner

- 100: Parameter
- 110: Sensordaten
- 115: Cluster
- 120: Darstellung
- 130: Sequenz
- 135: ausgeblendete Sequenz
- 140: Modell
- 150: Merkmalsextraktionsnetzwerk
- 160: gespeicherte Sensordaten

## Patentansprüche

1. Verfahren zur Vorhersage eines fahrzeugspezifischen Parameters (100), insbesondere einer Identität einer fahrenden Person (11), umfassend:
- Erfassen von Sensordaten (110) durch Sensoren (20), welche dazu ausgeführt sind, fahrzeugspezifische Messwerte aufzunehmen,
- Umsetzen von Sensordaten (110) in eine numerische Darstellung (120), wobei
i. die fahrzeugspezifischen Messwerte mit einer unüberwachten Clustering-Methode mehreren Clustern (115) zugeordnet, und die Cluster (115) in eine Folge von Cluster-IDs umgewandelt werden,
ii. die Cluster-IDs codiert und durch einen Tokenisierungsalgorithmus ein Vokabular erstellt wird, wobei jede Vokabel einer codierten Sequenz (130) entspricht,
- Zuführen der numerischen Darstellung (120) an zumindest ein trainiertes vorhersagespezifisches Modell (140), welches dazu ausgeführt ist, eine Vorhersage des fahrzeugspezifischen Parameters (100) auszugeben,
wobei das trainierte vorhersagespezifische Modell (140) auf ein Merkmalsextraktionsnetzwerk (150) zurückgreift, welches mit gespeicherten Sensordaten (160) in der numerische Darstellung (120) trainiert wurde.

2. Verfahren nach Anspruch 1,
**dadurch gekennzeichnet,**
**dass** ferner das Auslösen zumindest einer Fahrzeugfunktion oder einer Kommunikation vorgesehen ist, wobei das Auslösen auf Basis des vorhergesagten fahrzeugspezifischen Parameters (100) erfolgt.

3. Verfahren nach Anspruch 1 oder 2,
**dadurch gekennzeichnet,**
**dass** zumindest einer der Sensoren (20) dazu ausgeführt ist, zumindest für eine Fahrdynamik des Fahrzeuges (10) spezifische Messgrößen, insbesondere zumindest das anliegende Drehmoment, Umdrehungen des Motors und/oder der Räder, oder den Batteriestatus, oder
für eine Fahrdynamik des Fahrzeuges (10) unspezifische Messgrößen, insbesondere zumindest eine Einstellung eines Temperaturregelungssystems, eine Temperatur im Innenraum oder in Fahrzeugumgebung, eine Sitzposition, oder den Zustand eines Entertainmentsystems, zu erfassen.

4. Verfahren nach einem der vorhergehenden Ansprüche,
**dadurch gekennzeichnet,**
**dass** zumindest fünf Sensoren (20) zur Erfassung der Sensordaten (110) vorgesehen sind.

5. Verfahren nach einem der vorhergehenden Ansprüche,
**dadurch gekennzeichnet,**
**dass** die Sensordaten (110) zumindest für eine Dauer von 4 Minuten, insbesondere 8 Minuten, spezifisch sind.

6. Verfahren nach einem der vorhergehenden Ansprüche,
**dadurch gekennzeichnet,**
**dass** die unüberwachte Clustering-Methode als k-nearest neighbors-Algorithmus (KKN) ausgeführt ist.

7. Verfahren nach einem der vorhergehenden Ansprüche,
**dadurch gekennzeichnet,**
**dass** der Tokenisierungsalgorithmus als Byte-Pair Encoding-Algorithmus ausgeführt ist.

8. Verfahren nach einem der vorhergehenden Ansprüche,
**dadurch gekennzeichnet,**
**dass** das vorhersagespezifische Modell (140) dazu ausgeführt ist, zumindest die Identität einer fahrenden Person (11) oder einen vom Fahrzeug (10) befahrenen Straßentyp (40) festzustellen.

9. Verfahren nach einem der vorhergehenden Ansprüche,
**dadurch gekennzeichnet,**
**dass** zumindest die numerische Darstellung (120) der Sensordaten (110) keine physikalische Bedeutung hat, oder
**dass** die Anzahl der Zeichen, mit denen die Cluster-IDs bezeichnet werden, wenigstens 1000, insbesondere wenigstens 10.000 Zeichen beträgt.

10. Verfahren zum Erstellen eines Modells zur Vorhersage eines fahrzeugspezifischen Parameters (100), insbesondere einer Identität einer fahrenden Person (11), umfassend:
- Zuordnen von gespeicherten Sensordaten (160), welche für zumindest ein Fahrzeug (10) spezifisch sind, mit einer unüberwachten Clustering-Methode in mehrere Cluster (115), wobei die Cluster (115) in eine Folge von Cluster-IDs umgewandelt werden,
- Codieren der Cluster-IDs durch einen Tokenisierungsalgorithmus und Erstellen eines Vokabulars, wobei jede Vokabel einer codierten Sequenz (130) entspricht, und
- selbstüberwachtes Lernen der codierten Sequenzen (130), um ein trainiertes Merkmalsextraktionsnetzwerk (150) zu erhalten,
- Trainieren eines vorhersagespezifisches Modells (140) mit den gespeicherten Sensordaten (160), welches dazu ausgeführt ist, eine Vorhersage eines fahrzeugspezifischen Parameters (100) auszugeben,
wobei das vorhersagespezifische Modell (140) auf ein Merkmalsextraktionsnetzwerk (150) zurückgreift, welches mit gespeicherten Sensordaten (160) in der numerischen Darstellung (120) trainiert wurde.

11. Verfahren nach Anspruch 10,
**dadurch gekennzeichnet,**
**dass** zumindest das selbstüberwachte Lernen ein Sprachrepräsentationsmodell umfasst, oder
das vorhersagespezifische Modell (140) dem Merkmalsextraktionsnetzwerk (150) mit einem weiteren Ausgabelayer entspricht.

12. Verfahren nach einem der Ansprüche 10 oder 11,
**dadurch gekennzeichnet,**
**dass** das selbstüberwachte Lernen ein zumindest ein BERT-Modell (Bidirectional Encoder Representations from Transformers), ROBERT-Modell oder Distil-BERT-Modell umfasst.

13. Computerprogrammprodukt, umfassend Befehle, die bei der Ausführung des Programms durch eine Recheneinheit (30) diese veranlassen, zumindest das Verfahren nach einem der Ansprüche 1 bis 9 oder das Verfahren nach einem der Ansprüche 10 bis 12 auszuführen.

14. System, umfassend eine Recheneinheit (30), welche dazu ausgeführt ist, zumindest das Verfahren nach einem der Ansprüche 1 bis 9 oder das Verfahren nach einem der Ansprüche 10 bis 12 auszuführen, wobei die Recheneinheit (30) zumindest in einem Fahrzeug (10), in einem Cloudrechner (60), welcher mit dem Fahrzeug (10) in Datenkommunikation steht, oder in einer Verkehrsinfrastruktur (50), welche mit dem Fahrzeug (10) in Datenkommunikation steht, angeordnet ist.

## Claims

1. Method for predicting a vehicle-specific parameter (100), in particular an identity of a driving person (11), comprising:
- acquiring sensor data (110) by means of sensors (20) which are designed to record vehicle-specific measured values,
- converting sensor data (110) into a numerical representation (120), wherein
i. the vehicle-specific measured values are assigned to a plurality of clusters (115) using an unsupervised clustering method, and the clusters (115) are converted into a series of cluster IDs,
ii. the cluster IDs are encoded and a vocabulary is created by a tokenization algorithm, wherein each word corresponds to an encoded sequence (130),
- feeding the numerical representation (120) to at least one trained prediction-specific model (140) which is designed to output a prediction of the vehicle-specific parameter (100),
wherein the trained prediction-specific model (140) accesses a feature extraction network (150) which was trained with stored sensor data (160) in the numerical representation (120).

2. Method according to claim 1,
**characterized in that**
the triggering of at least one vehicle function or communication is also provided, the triggering taking place on the basis of the predicted vehicle-specific parameter (100).

3. Method according to claim 1 or 2,
**characterized in that**
at least one of the sensors (20) is designed
to acquire specific measured variables at least for driving dynamics of the vehicle (10), in particular at least the applied torque, revolutions of the engine and/or the wheels, or the battery status, or
to acquire non-specific measured variables for driving dynamics of the vehicle (10), in particular at least setting of a temperature control system, a temperature in the interior or in the vehicle surroundings, a seating position, or the state of an entertainment system.

4. Method according to any of the preceding claims,
**characterized in that**
at least five sensors (20) are provided for acquiring the sensor data (110).

5. Method according to any of the preceding claims,
**characterized in that**
the sensor data (110) are specific for at least a period of 4 minutes, in particular 8 minutes.

6. Method according to any of the preceding claims,
**characterized in that**
the unsupervised clustering method is implemented as a k-nearest neighbors algorithm (KKN).

7. Method according to any of the preceding claims,
**characterized in that**
the tokenization algorithm is implemented as a byte-pair encoding algorithm.

8. Method according to any of the preceding claims,
**characterized in that**
the prediction-specific model (140) is designed to determine at least the identity of a driving person (11) or a road type (40) traveled on by the vehicle (10).

9. Method according to any of the preceding claims,
**characterized in that**
at least the numerical representation (120) of the sensor data (110) has no physical meaning, or
**in that** the number of characters used to identify the cluster IDs is at least 1,000, in particular at least 10,000 characters.

10. Method for creating a model for predicting a vehicle-specific parameter (100), in particular an identity of a driving person (11), comprising:
- assigning stored sensor data (160) specific to at least one vehicle (10) into a plurality of clusters (115) using an unsupervised clustering method, wherein the clusters (115) are converted into a series of cluster IDs,
- encoding the cluster IDs by means of a tokenization algorithm and creating a vocabulary, wherein each word corresponds to an encoded sequence (130), and
- learning the encoded sequences (130) in a self-supervised manner to obtain a trained feature extraction network (150),
- training a prediction-specific model (140) with the stored sensor data (160), which model is designed to output a prediction of a vehicle-specific parameter (100),
wherein the prediction-specific model (140) accesses a feature extraction network (150) which has been trained with stored sensor data (160) in the numerical representation (120).

11. Method according to claim 10,
**characterized in that**
at least the self-supervised learning comprises a language representation model, or
the prediction-specific model (140) corresponds to the feature extraction network (150) with a further output layer.

12. Method according to either claim 10 or 11,
**characterized in that**
the self-supervised learning comprises at least one BERT model (Bidirectional Encoder Representations from Transformers), ROBERT model or DistilBERT model.

13. Computer program product comprising instructions which, when the program is executed by a computing unit (30), cause the computing unit to execute at least the method according to any of claims 1 to 9 or the method according to any of claims 10 to 12.

14. System comprising a computing unit (30) which is designed to execute at least the method according to any of claims 1 to 9 or the method according to any of claims 10 to 12, wherein the computing unit (30) is arranged at least in a vehicle (10), in a cloud computer (60) which is in data communication with the vehicle (10), or in a traffic infrastructure (50) which is in data communication with the vehicle (10).

## Revendications

1. Procédé de prédiction d'un paramètre spécifique à un véhicule (100), en particulier d'une identité d'une personne conductrice (11), comprenant :
- l'acquisition de données de capteur (110) par des capteurs (20) qui sont conçus pour enregistrer des valeurs de mesure spécifiques au véhicule,
- la conversion de données de capteur (110) en une représentation numérique (120), dans lequel
i. les valeurs de mesure spécifiques au véhicule sont attribuées à plusieurs groupes (115) à l'aide d'un procédé de regroupement non surveillé, et les groupes (115) sont convertis en une séquence d'ID de groupes,
ii. les ID de groupes sont codés et un vocabulaire est créé par un algorithme de segmentation en jetons, dans lequel chaque vocable correspond à une séquence codée (130),
- alimentation de la représentation numérique (120) à au moins un modèle spécifique à la prédiction (140) entraîné qui est conçu pour délivrer une prédiction du paramètre spécifique au véhicule (100),
dans lequel le modèle spécifique à la prédiction (140) entraîné fait appel à un réseau d'extraction de caractéristiques (150) qui a été entraîné avec des données de capteur (160) stockées dans la représentation numérique (120).

2. Procédé selon la revendication 1,
**caractérisé en ce**
**qu'**il est prévu en outre le déclenchement d'au moins une fonction de véhicule ou d'une communication, dans lequel le déclenchement s'effectue sur la base du paramètre spécifique au véhicule (100) prédit.

3. Procédé selon la revendication 1 ou 2,
**caractérisé en ce**
**qu'**au moins l'un des capteurs (20) est conçu au moins pour saisir
des grandeurs de mesure spécifiques à une dynamique de conduite du véhicule (10), en particulier au moins le couple appliqué, les rotations du moteur et/ou des roues, ou l'état de batterie, ou
des grandeurs de mesure non spécifiques à une dynamique de conduite du véhicule (10), en particulier au moins un réglage d'un système de régulation de température, une température dans l'habitacle ou dans l'environnement de véhicule, une position de siège, ou l'état d'un système de divertissement.

4. Procédé selon l'une des revendications précédentes,
**caractérisé en ce**
**qu'**au moins cinq capteurs (20) sont prévus pour la saisie des données de capteur (110).

5. Procédé selon l'une des revendications précédentes,
**caractérisé en ce**
**que** les données de capteur (110) sont spécifiques au moins pour une durée de 4 minutes, en particulier de 8 minutes.

6. Procédé selon l'une des revendications précédentes,
**caractérisé en ce**
**que** le procédé de regroupement non surveillé est conçu comme algorithme des k plus proches voisins (KKN).

7. Procédé selon l'une des revendications précédentes,
**caractérisé en ce**
**que** l'algorithme de segmentation en jetons est conçu comme un algorithme de codage par paire d'octets.

8. Procédé selon l'une des revendications précédentes,
**caractérisé en ce**
**que** le modèle spécifique à la prédiction (140) est conçu pour déterminer au moins l'identité d'une personne conductrice (11) ou un type de route (40) emprunté par le véhicule (10).

9. Procédé selon l'une des revendications précédentes,
**caractérisé en ce**
**qu'**au moins la représentation numérique (120) des données de capteur (110) n'a pas de signification physique, ou
**que** le nombre de caractères avec lesquels les ID de groupe sont désignés est d'au moins 1 000, en particulier d'au moins 10 000 caractères.

10. Procédé de création d'un modèle pour prédire un paramètre spécifique à un véhicule (100), en particulier une identité d'une personne conductrice (11), comprenant :
- l'attribution de données de capteur (160) stockées, qui sont spécifiques à au moins un véhicule (10), à l'aide d'un procédé de regroupement non surveillé dans plusieurs groupes (115), dans lequel les groupes (115) sont convertis en une séquence d'ID de groupes,
- le codage des ID de groupe par un algorithme de segmentation en jetons et la création d'un vocabulaire, dans lequel chaque vocable correspond à une séquence codée (130), et
- l'apprentissage auto-surveillé des séquences codées (130) afin d'obtenir un réseau d'extraction de caractéristiques (150) entraîné,
- l'entraînement d'un modèle spécifique à la prédiction (140) avec les données de capteur (160) stockées, lequel modèle est conçu pour fournir une prédiction d'un paramètre spécifique au véhicule (100),
dans lequel le modèle spécifique à la prédiction (140) fait appel à un réseau d'extraction de caractéristiques (150) qui a été entraîné avec des données de capteur (160) stockées dans la représentation numérique (120).

11. Procédé selon la revendication 10,
**caractérisé en ce**
**qu'**au moins l'apprentissage auto-surveillé comprend un modèle de représentation de la langue, ou
le modèle spécifique à la prédiction (140) correspond au réseau d'extraction de caractéristiques (150) avec une autre couche de sortie.

12. Procédé selon l'une des revendications 10 ou 11,
**caractérisé en ce**
**que** l'apprentissage auto-surveillé comprend au moins un modèle BERT (Bidirectional Encoder Representations from Transformers), un modèle ROBERT ou un modèle Distil-BERT.

13. Produit programme d'ordinateur comprenant des instructions qui, lors de l'exécution du programme par une unité de calcul (30), amènent celle-ci à exécuter au moins le procédé selon l'une des revendications 1 à 9 ou le procédé selon l'une des revendications 10 à 12.

14. Système comprenant une unité de calcul (30) conçue pour exécuter au moins le procédé selon l'une des revendications 1 à 9 ou le procédé selon l'une des revendications 10 à 12, dans lequel l'unité de calcul (30) est agencée au moins dans un véhicule (10), dans un ordinateur en nuage (60) qui est en communication de données avec le véhicule (10) ou dans une infrastructure de transport (50) qui est en communication de données avec le véhicule (10).
